# EUROPÄISCHE PATENTSCHRIFT

(11) **EP 1 106 128 B1**
(45) Veröffentlichungstag und Bekanntmachung des Hinweises auf die Patenterteilung: **16.01.2002**
(21) Anmeldenummer: 99123852.8
(22) Anmeldetag: 01.12.1999
(51) Int. Cl.: A47K 3/02, B29C 63/48

(54) **Sanitärwanne**
Tub for sanitary use
Cuvette pour sanitaires

(43) Veröffentlichungstag der Anmeldung: 13.06.2001
(73) Patentinhaber: Franz Kaldewei GmbH & Co.KG, 59229 Ahlen (DE)
(72) Erfinder: Pieper, Fritz, 27775 Delmenhorst (DE)
(74) Vertreter: Albrecht, Rainer Harald, Dr.-Ing.

(56) Entgegenhaltungen:
- EP-A- 0 015 020
- DE-A- 2 418 118
- DE-A- 4 431 716

## Beschreibung

Die Erfindung betrifft eine Sanitärwanne mit einer Außenschale aus Stahlblech, einer Innenschale aus Kunststoff und einer die beiden Schalen verbindenden Zwischenschicht, wobei auf der Außenschale eine Schutzschicht als Korrosionsschutz aufgebracht ist. Innen- und Außenschale sind tiefgezogene Werkstücke, wobei die Innenschale zumeist aus einem substanzpolymerisierten Polymethylmetacrylat (PMMA), auch Acryl genannt, besteht.

Bei der aus DE-C 44 31 716 bekannten Sanitärwanne, von der die Erfindung ausgeht, ist die Außenschale gebeizt und rückseitig grundemailliert. Da die Haftung der Zwischenschicht, die aus einem Polyurethan oder einer Metacryl-Verbindung besteht, auf einer emaillierten Fläche unzureichend ist, ist an der Innenfläche der Stahlblechschale keine Emaillierung vorgesehen. Das erschwert eine rationelle Fertigung der Wanne, da ein übliches Tauchverfahren für die Emaillierung nicht angewendet werden kann oder eine an der Innenseite aufgetragene Emailleschicht mechanisch, z. B. durch Sandstrahlen, wieder abgetragen oder zumindest aufgerauht werden muß. Gemäß einer weiteren, ebenfalls in DE-C 44 31 716 beschriebenen Ausführung wird die aus Stahlblech tiefgezogene Außenschale gebeizt und passiviert, bevor die innenseitige Acrylschale eingeformt und mit dem Stahlrohling verklebt wird. In einem letzten Verfahrensschritt wird auf die Außenschale der Verbundwanne eine Rostschutzschicht aufgetragen. Dabei muß der Rand sowie die Innenseite der bereits hergestellten Verbundwanne aufwendig abgedeckt werden. Ferner besteht die Gefahr, daß durch die notwendigen Abdeckungen der Korrosionsschutz entlang des Wannenrandes unvollkommen ist.

Der Erfindung liegt die Aufgabe zugrunde, eine Sanitärwanne des eingangs beschriebenen Aufbaus so auszubilden, daß eine einfache und rationelle Fertigung möglich ist, ohne daß der Korrosionsschutz der Außenschale und der Verbund zwischen Außenschale und Innenschale darunter leidet.

Die Aufgabe wird erfindungsgemäß dadurch gelöst, daß die Außenschale mit einer sowohl innenseitig als auch außenseitig aufgetragenen Beschichtung versehen ist, die aus einer durch Phosphatieren hergestellten Konversionsschicht und einem Lack besteht und an der Außenseite die abriebfeste und schlagfeste Schutzschicht sowie an der Schaleninnenseite einen ohne mechanische Aufrauhung wirksamen Haftvermittler zwischen Stahlblech und Zwischenschicht bildet. Erfindungsgemäß erhält der Stahlrohling, bevor er mit der Kunststoffinnenschale verbunden wird, sowohl innenseitig als auch außenseitig eine Beschichtung, die durch rationelle Auftragsverfahren aufgebracht werden kann. Die Beschichtung besteht aus einer Konversionsschicht, die durch Eisenphosphatierung oder Zinkphosphatierung herstellbar ist, und einem auf die Konversionsschicht aufgebrachten Lack. Da der gesamte Stahlrohling lackiert wird und Abdeckungen nicht erforderlich sind, können rationelle und für die Serienfertigung geeignete Lackierverfahren eingesetzt werden. Der Lack kann mit Luftzerstäubung, Airless-Spritzen, Spritzen mit Elektrostatik, durch Tauchverfahren oder Elektrotauchlackierung aufgebracht werden. Die Erfindung beruht auf der Überlegung, für den Korrosionsschutz der Stahlblechschale ein Beschichtungsmittel auszuwählen, welches nicht nur einen ausreichenden Korrosionsschutz gewährleistet sondern zugleich auch als Primer eine gute Haftung zwischen der Außenschale und der anschließenden Zwischenschicht, welche den Verbund zwischen Kunststoffinnenschale und metallischer Außenschale herstellt, bewirkt. Insofern erfüllt das Beschichtungsmittel im Rahmen der erfindungsgemäßen Lehre unterschiedliche Funktionen an der Außenseite des Stahlrohlings und an der Innenfläche des Stahlrohlings.

Die Zwischenschicht besteht vorzugsweise aus einem Polyurethan oder einer Metacryl-Verbindung. Die Konversionsschicht enthält je nach gewähltem Phosphatierungsverfahren im wesentlichen Eisenphosphate mit Anteilen an Eisenoxid oder Zinkphosphate.

Der Lack muß im Rahmen der erfindungsgemäßen Lehre die vorstehend erläuterten unterschiedlichen Funktionen erfüllen. Geeignet sind insbesondere Lacke auf Epoxidharzbasis, insbesondere Einbrennlacke. Gemäß einer bevorzugten Ausführungsform der Erfindung wird ein wasserverdünnbarer, durch Elektrotauchlackierung aufgetragener Epoxidharzlack verwendet. Durch Elektrotauchlackierung läßt sich ein dünner Film zwischen 10 und 40 µm mit einem hohen Festkörpergehalt aufbringen. Nach dem Abspülen mit ultrafiltriertem Wasser erhält der Lackfilm seine endgültige Härte und Festigkeit bei einer Einbrenntemperatur zwischen 150 und 200° C. Die Beschichtung mit einem Epoxidharzlack zeichnet sich durch eine ausgezeichnete Haftfestigkeit, hohe Härte und Abriebfestigkeit aus. Sie besitzt ferner überraschend günstige Primereigenschaften und bewirkt einen festen Verbund mit der aus einem Polyurethan oder einer Metacryl-Verbindung bestehenden Zwischenschicht, so daß eine Sanitärwanne mit einem guten Verbund zwischen metallischer Außenschale und Kunststoffinnenschale resultiert.

Gemäß einer weiteren, ebenfalls bevorzugten Ausführungsform der Erfindung besteht die sowohl innenseitig als auch außenseitig auf die metallische Außenschale aufgetragene Beschichtung aus einer durch Phosphatieren hergestellten Konversionsschicht und einem Polyurethan(PUR)-Lack. Es sind einkomponentige und zweikomponentige PUR-Lacke einsetzbar. Die PUR-Lacksysteme zeichnen sich durch hohe Härte, Dauerelastizität und Abriebfestigkeit aus. Daneben resultiert eine überraschend gute Haftung mit der Innen- und Außenschale verbindenden Zwischenschicht.

## Patentansprüche

1. Sanitärwanne mit
einer Außenschale aus Stahlblech,
einer Innenschale aus Kunststoff und
einer die beiden Schalen verbindenden Zwischenschicht,
wobei auf der Außenschale eine Schutzschicht als Korrosionsschutz aufgebracht ist, **dadurch gekennzeichnet, daß** die Außenschale mit einer sowohl innenseitig als auch außenseitig aufgetragenen Beschichtung versehen ist, die aus einer durch Phosphatieren hergestellten Konversionsschicht und einem Lack besteht und an der Außenseite die abriebfeste und schlagfeste Schutzschicht sowie an der Schaleninnenseite einen ohne mechanische Aufrauhung wirksamen Haftvermittler zwischen Stahlblech und Zwischenschicht bildet.

2. Sanitärwanne nach Anspruch 1, **dadurch gekennzeichnet, daß** die Zwischenschicht aus Polyurethan oder einer Metacryl-Verbindung besteht.

3. Sanitärwanne nach Anspruch 1 oder 2, **dadurch gekennzeichnet, daß** die Konversionsschicht im wesentlichen Eisenphospate enthält.

4. Sanitärwanne nach Anspruch 1 oder 2, **dadurch gekennzeichnet, daß** die Konversionsschicht im wesentlichen Zinkphosphate enthält.

5. Sanitärwanne nach einem der Ansprüche 1 bis 4, **dadurch gekennzeichnet, daß** der Lack ein Einbrennlack auf Epoxidharzbasis ist.

6. Sanitärwanne nach einem der Ansprüche 1 bis 5, **dadurch gekennzeichnet, daß** der Lack ein wasserverdünnbarer, durch Elektrotauchlackierung aufgetragener Epoxidharzlack ist.

7. Sanitärwanne nach einem der Ansprüche 1 bis 4, **dadurch gekennzeichnet, daß** der Lack ein Polyurethan(PUR)-Lack ist.

## Claims

1. A sanitary tub, comprising
an outer shell made of sheet steel,
an inner shell made of plastics material, and
an intermediate layer which joins the two shells,
wherein a protective layer is applied to the outer shell as a protection from corrosion, **characterised in that** the outer shell is provided with a coating which is applied both on the inside and the outside and which consists of a conversion layer produced by phosphating and of a lacquer, and which forms an abrasion-resistant and impact-resistant protective layer on the outside, and which on the inside of the shell forms a bonding agent, which is effective without mechanical roughening, between the sheet steel and the intermediate layer.

2. A sanitary tub according to claim 1, **characterised in that** the intermediate layer consists of polyurethane or of a methacrylic compound.

3. A sanitary tub according to claims 1 or 2, **characterised in that** the conversion layer essentially contains iron phosphates.

4. A sanitary tub according to claims 1 or 2, **characterised in that** the conversion layer essentially contains zinc phosphates.

5. A sanitary tub according to any one of claims 1 to 4, **characterised in that** the lacquer is an epoxy resin-based stoving lacquer.

6. A sanitary tub according to any one of claims 1 to 5, **characterised in that** the lacquer is a water-thinnable epoxy resin lacquer which is applied by electro-dip coating.

7. A sanitary tub according to any one of claims 1 to 4, **characterised in that** the lacquer is a polyurethane (PUR) lacquer.

## Revendications

1. Cuve de sanitaire avec
une coque extérieure en tôle d'acier,
une coque intérieure en matière plastique, et
une couche intermédiaire reliant les deux coques,
dans laquelle une couche de protection est mise en place sur la coque extérieure en tant que protection anti-corrosion, **caractérisée en ce que** la coque extérieure est munie d'un revêtement appliqué aussi bien à l'intérieur qu'à l'extérieur qui se compose d'une couche de conversion réalisée par phosphatage et d'une laque, et, sur le côté extérieur, la couche de protection résistant aux frottements et aux chocs ainsi que sur le côté intérieur de la coque, forme un agent de pontage efficace sans grattage mécanique entre la tôle d'acier et la couche intermédiaire

2. Cuve de sanitaire selon la revendication 1, **caractérisée par le fait que** la couche intermédiaire se compose de polyuréthane ou d'un composé métacrylique.

3. Cuve de sanitaire selon la revendication 1 ou 2, **caractérisée en ce que** la couche de conversion contient essentiellement du phosphate de fer.

4. Cuve de sanitaire selon la revendication 1 ou 2, **caractérisée en ce que** la couche de conversion contient essentiellement du phosphate de zinc.

5. Cuve de sanitaire selon l'une des revendications 1 à 4, **caractérisée par le fait que** la laque est une laque à cuire à base de résine époxy.

6. Cuve de sanitaire selon l'une des revendications 1 à 5, **caractérisée en ce que** la laque est une laque de résine époxy diluable dans l'eau appliquée par trempage électro-phorétique.

7. Cuve de sanitaire selon l'une des revendications 1 à 4, **caractérisée par le fait que** la laque est une laque polyuréthane (PUR).
